# EUROPEAN PATENT APPLICATION

(11) **EP 1 703 615 A1**
(43) Date of publication of application: **20.09.2006**
(21) Application number: 06251357.7
(22) Date of filing: 14.03.2006
(51) Int. Cl.: H02J 7/00, G21H 1/00

(54) **Energy storage device charging system**

(30) Priority: 14.03.2005 US 661800 P; 09.03.2006 US 373131
(71) Applicant: Alfred E. Mann Foundation for Scientific Research, Santa Clarita, CA 91380-9005 (US)
(72) Inventor: Schulman, Joseph H., Santa Clarita, CA 91387 (US)
(74) Representative: Carter, Stephen John

(57) **Abstract**

A long life high peak power energy storage device charging system includes an atomic battery (12) coupled through a charging controller (14) to an energy storage device (10). Energy storage devices such as a capacitor and rechargeable batteries are contemplated by the present invention. The charging controller (14) serves to prevent overcharging of the energy storage device (10). In one embodiment the atomic battery is contained within the rechargeable battery in a closed container.

## Description

### Field of the Invention

The field of the invention relates to charging rechargeable batteries or other energy storage devices. More particularly, to charging a battery using an atomic battery as a charging source.

### Summary of Invention

In one aspect the invention provides a system for charging a rechargeable battery as set forth in claim 1. In another aspect there is provided a system for charging an energy storage device as set forth in claim 23.

### Detailed Description of the Drawings

Figure 1 is a block diagram of an example system of the present invention;
Figure 2 is a block diagram of the system of Fig. 1 showing a charging voltage limiter device;
Figure 3 is a block diagram of the system of Fig. 1 showing a charging current limiter circuit;
Figure 4 is a schematic circuit diagram of an example series-parallel circuit arrangement of atomic battery cells for use in the system of Fig. 1;
Figure 5 is a cutaway cross-sectional top view of an atomic battery contained within a rechargeable battery included in the system of Fig. 1;
Figure 6 is a partial elevation view of the battery arrangement of Fig. 5;
Figure 7 is a partial schematic cutaway cross-sectional view of an energy storage device encased in an enclosed sealed battery holder for the system of Fig. 1;
Figure 8 is a block diagram of the system of claim 1 including a current flow direction controller and a current controller; and
Figure 9 is a block diagram of the system of Fig. 1 showing details of a current flow controller.

### Detailed Description

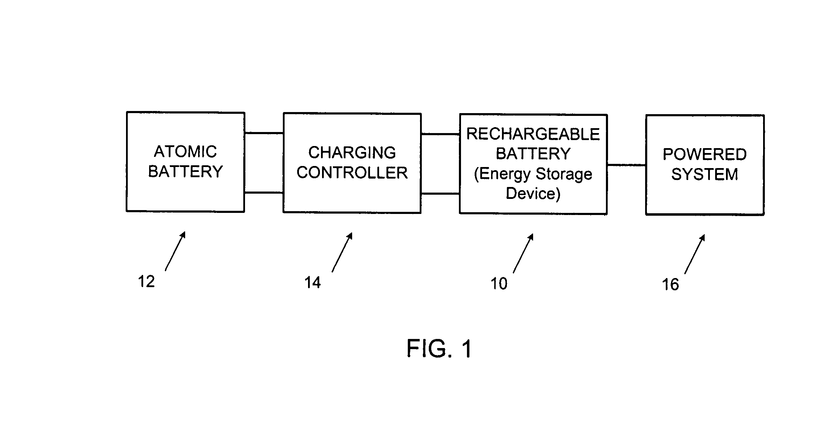

In FIG. 1 an exemplary charging scheme is illustrated in conformance with the principals of an embodiment of the instant invention. More particularly, an energy storage device preferably in the form of a rechargeable battery 10 is recharged by means of atomic battery 12 through a charging regulator or controller 14. Atomic batteries are characterized as having a long life span providing uninterrupted operation for in the order of about 10-20 years. Tritium, for example, which is known as a Beta-emitter which emits beta particles (electrons), gives rise to its use in atomic batteries, has a ½ life of about 12.5 years. Other Beta-emitters, for example, consist of a tritium titanium compound, also known as Ti-T compound as described in U.S. Patent 3,934,162.

The present invention contemplates the use of atomic batteries that are electron-emitting batteries as distinct from nuclear battery devices called radioisotope thermoelectric generators or RTGs. RTGs utilize nuclear particle emission energy to set up a temperature difference, which an array of thermocouples converts into electrical energy. The atomic battery of the instant invention utilizes electron emission rather than heat conversion to provide electrical energy. A construction of an atomic battery may comprise a silicone plate layer and a metallization layer with a radioactive material, that is a Beta-emitter material, placed between the layers in a somewhat "sandwich" arrangement. For small battery applications each material arrangement may be in the range of about 2.5 mm in diameter and being of about 5 mm in thickness. Multiple "sandwich" assemblies may be coupled together in parallel or series circuit arrangement to provide either higher current output or higher voltage output, that would otherwise not be available with one assembly. With multiple assemblies, a deliverable current of 5 or more micro amps is realizable. To maintain the atomic battery at no greater than about 2.5 mm in diameter and 10 mm in length maximum current delivery capacity is typically limited in the range of about 5 to 10 micro amps.

Coupled to atomic battery 12 through charging controller 14 is a rechargeable battery or energy storage device 10. The rechargeable battery or energy storage device is configured to provide electrical power to a system 16. Rechargeable batteries contemplated but not limited by the instant invention include lithium-ion, nickel metal hydride, nickel cadmium, Edison ion and hydrogen cell chemistries. Such rechargeable batteries are characterized as having the capability of providing maximum currents on the order of milliamps on a low duty cycle basis. By way of example a rechargeable battery operating to deliver current in the order of 1 milliamp for about 10 microseconds and the delay of about 2 seconds before a repeat delivery of current for 10 microseconds occurs, is contemplated by the invention. The on to off duty cycle in this case is about .0005%. On the other hand, if the rechargeable battery has an average current drain including self-discharge or leakage currents between 2 and 4 micro amps, then an atomic battery delivering 5 micro amps is capable of maintaining the rechargeable battery in a charged condition until either the chemical composition of the rechargeable battery failed or the radiation source or β-emission reduced to a value insufficient to maintain the charging process.

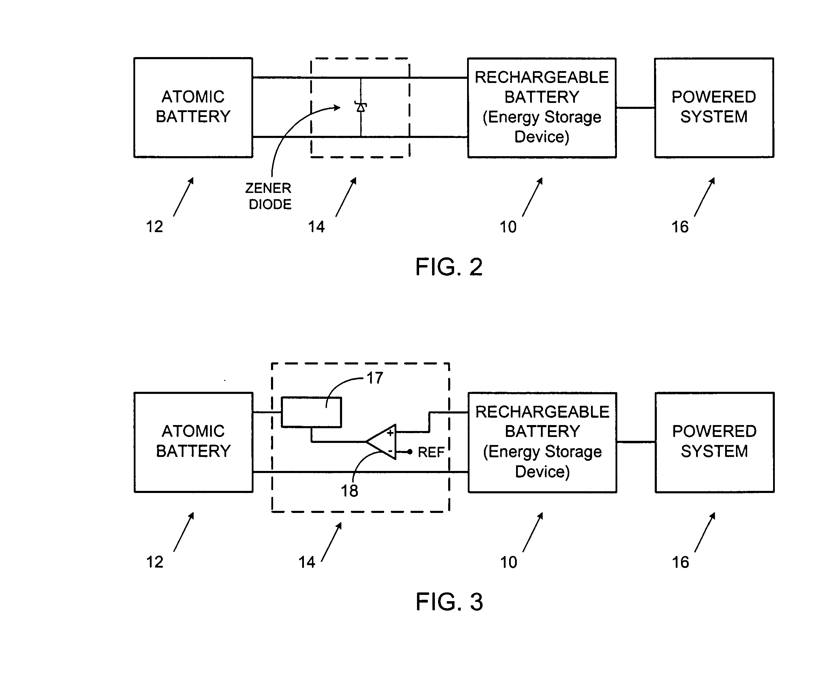

A storage capacitor utilized as an alternate energy storage device is contemplated by the instant invention that is to be charged and thereafter deliver charge to the powered system 16. The charging rate of the capacitor is function of the current delivery capability of the atomic battery and the charge deposited and stored in the capacitor is the current delivered by the atomic battery multiplied by the length of time devoted to current delivery. The voltage developed across the capacitor is a function of the accumulated charge and the capacitance value of the capacitor through the equation V = Q x C. To prevent overcharging of the energy storage device, a charging controller 14 is disposed between atomic battery 12 and the device 10. A commercially available charging controller 14 may for example, comprise a zener diode selected on the basis of a desired maximum voltage to which the energy storage device is to be charged. Such arrangement is shown in FIG. 2 where the zener diode is coupled across the connections between the atomic battery 12 and the energy storage device 10.

An alternate embodiment of the charging controller 14 is shown in FIG. 3, wherein the controller comprises a current gate 17 coupled between the atomic battery 12 and the energy storage device 10 which controls the amount of charging current flowing to the energy storage device. Control of gate 16 is provided by differential amplifier 18, which compares a voltage appearing at the energy storage device 10, and a pre-selected reference. Accordingly, the differential amplifier 18 provides a control signal to the current gate 16 so as to maintain the energy storage device voltage at the referenced value.

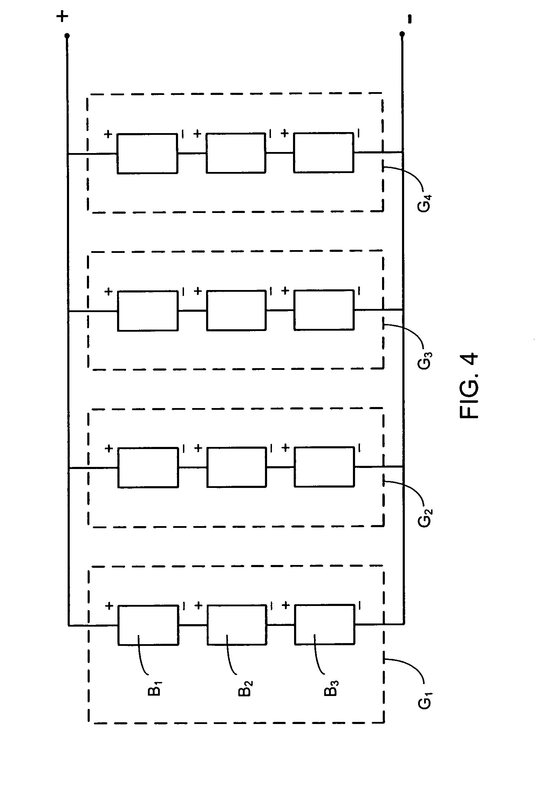

From a structural assembly consideration the invention contemplates that the atomic battery 12 be substantially surrounded in close proximity, if not in contact, with a rechargeable battery or energy storage device. Such configuration eliminates, or at least minimizes, the radiation leakage effects from the atomic battery to provide a radiation free environment around the rechargeable battery. As previously described, the atomic battery may comprise elements in a disk "sandwich" like assembly such as that shown in U.S. Patent 5,606,213. The atomic battery described the '213 patent includes a P-type and N-type tritiated amorphous carbon layers which are separated by and in contact with a layer of intrinsic tritiated amorphous silicon. According to the `213 patent, an intrinsic silicon layer thickness of 1 micrometer with the P and N material thickness being a fraction of a micrometer, a cell potential of 1 volt and a cell current capability of 0.8 µA/cm² (micro amps per centimeter squared) is within expectation. For greater overall battery voltages in excess of 1 cell voltage, several cells may be arranged in groups in series circuit arrangement and greater current delivery capability may be obtained with groups of series connected cells that are arranged in parallel circuit configuration. With the foregoing assumed voltage and current capabilities of each cell, an overall battery output voltage requirement of 3 volts would require 3 cells arranged in series and for an overall battery current capability of 3.2 micro amps per centimeter squared, then 4 groups of 3 series connected cells would be connected in parallel circuit arrangement. An example of the foregoing is shown in schematic format in **FIG. 4.** In such case battery group one comprises the series connection of atomic battery B1, B2 and B3 with terminal pluralities as shown for each battery. The overall battery configuration includes the parallel connection of identical battery groups 1-4.

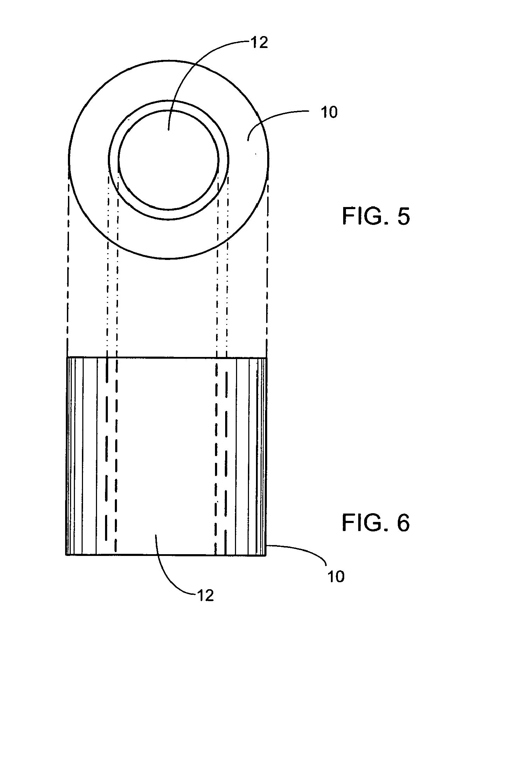

Where radiation leakage may be a concern for radiation leakage attributable to the atomic battery, the atomic battery may be contained within a rechargeable battery. Referring to FIG. 5 there is shown in schematic cutaway cross-sectional format, an atomic battery 12 contained within rechargeable battery 10 and Fig. 6 is an elevation view of the atomic battery 12 contained within the rechargeable battery 10. The space between atomic battery 12 and rechargeable battery 10 is for purposes of clarity to distinguish between the elements and in practice the outer surface of atomic battery 12 preferably is in contact with or in close proximity with the inner surface of rechargeable battery 10. Although shown in circular cross section it is to be understood that other geometries such as oval, square, and rectangular, as mere examples, are also contemplated by the present invention. Furthermore, the electrical connection between the atomic battery 12 and rechargeable battery 10, although not shown in FIG. 5, such connections are to be considered as shown in FIGS. 1-3.

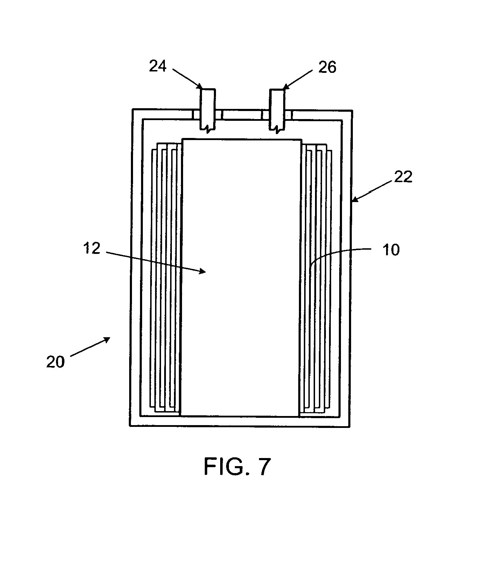

Another example of an atomic battery suitable for the configuration of FIG. 5 is described in U.S. Patent 5,721,462. The battery described in the '462 patent is formed by rolling a photovoltaic layer and a radioactive phosphor bearing gel into a multilayer cylinder. Whether in this shape of a multiple layer cylinder configuration or any of other suitable shapes, the atomic battery may be enclosed within a rechargeable battery in a number of suitable configurations. As an example, the lithium battery described in U.S. Patent 6,280,873 is used so as to be tightly wound around an access formed by atomic battery 12. An example of an energy storage device charging system incased in an enclosed sealed battery holder is shown in cutaway cross-sectional view of FIG. 7. The holder 20 includes the atomic battery 12 substantially surrounded by energy storage device [or rechargeable battery] 10 both being completely incased in a housing 22. For the embodiment of Fig. 7, the energy storage device 10 is shown comprising a multiple layer arrangement to define a rolled electrode arrangement. It is to be understood that other energy storage device configurations and arrangements are within the contemplation of the invention.

For additional safety considerations, the housing 22 may be formed of a radiation shielding material such as a metallic shielding material of a thickness sufficient to absorb any stray radiation emitted by the atomic battery. The housing 22 includes positive and negative feed-throughs 24 and 26, which extend externally of the housing 22. The feed-throughs 24 and 26 are internally connected to the electrodes [not shown] of rechargeable battery 10 in a manner similar to that described in U.S. Patent 6,596,439. The charging controller 14 is contained within the housing 22 and connected between the rechargeable battery 10 and atomic battery 12 in a manner shown in FIGS. 1-3.

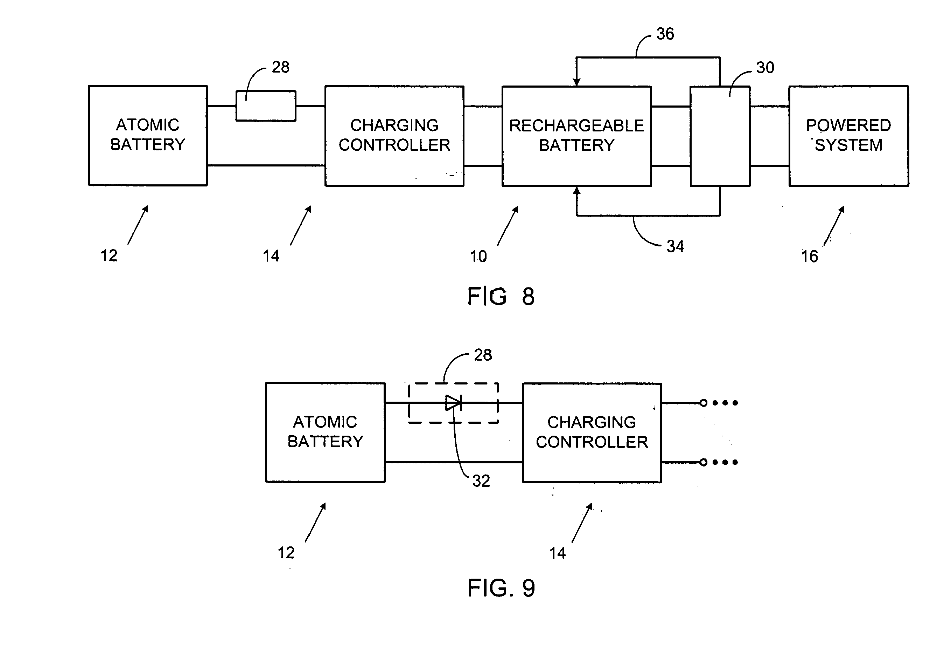

Referring now to FIG. 8 there is shown an enhancement of an example of the present invention showing the addition of current flow direction controller 28 connected between atomic battery 12 and charging controller 14. Current direction controller 28 serves to prevent current to flow from rechargeable battery 10 and/or charging controller 14 back into atomic battery 12. It is to be understood that controller 28 may also be included as part of charging controller 14. Such current backflow may occur if and when the atomic battery voltage falls below is nominal voltage output. As a precaution, controller 28 prevents back current from flowing into atomic battery 12. A partial block diagram of the present invention is shown in FIG. 9 where the controller 28 is shown to include diode 32. In such case, current flow is restricted to be only from the atomic battery 12 outward to charging controller 14. Current is prevented from flowing from the charging controller 14 to atomic battery 12 because diode 32 would be back biased and therefore block any such current flow.

A further enhancement to an example of the present invention is the addition of output current controller 30 positioned between rechargeable battery 10 and powered system 16. Current controller 30 limits the current delivered by rechargeable battery 10 to powered system 16 to a level that ensures the prevention of damage to the rechargeable battery. Obviously the value of the maximum current delivery level depends upon the size, and therefore capacity, of the rechargeable battery. Once the maximum capacity is achieved based upon battery specifications, the current controller 30 may be configured to feedback, to rechargeable battery 10 via conductor 36, a control signal to prevent rechargeable battery 10 from delivering current in excess of the prescribed limit. Alternately the discharging of rechargeable battery 10 may be controlled so as to ensure that the output voltage of rechargeable battery 10 does not drop below a prescribed value. As an example, for maximum battery lifetime, for a lithium-ion battery, the battery is charged to a voltage of no more than about 4 volts and is discharged to a voltage of no less than about 3 volts. In this regard current controller 30 is configured to monitor the output voltage of rechargeable battery 10 and an output voltage signal is fed back to rechargeable battery 10 via line 34 to control and prevent the output voltage of the rechargeable battery 10 from dropping below the prescribed value. Battery output voltage monitors and coulomb meters used for determining the charge level in a rechargeable battery are discussed in U.S. patent 6,067,474 to Schulman, et al. which is incorporated herein in its entirety by reference.

## Claims

1. A system for charging a rechargeable battery comprising:
a rechargeable battery capable of storing electrical energy; and
an atomic battery coupled to the rechargeable battery whereby electrical current generated by the atomic battery is provided to charge the rechargeable battery.

2. The system of claim 1 wherein the atomic battery is **characterized** as being a Beta-emitter device.

3. The system of claim 1 wherein the rechargeable battery is a lithium-ion battery.

4. The system of claim 1 wherein the rechargeable battery is a nickel metal hydride battery.

5. The system of claim 1 wherein the rechargeable battery is a nickel cadmium battery.

6. The system of claim 1 wherein the rechargeable battery device is an Edison-ion battery.

7. The system of claim 1 wherein the rechargeable battery is a hydrogen cell.

8. The system of claim 1 wherein the atomic battery is an electron-emitting device.

9. The system of claim 1 further comprising a charging controller connected between the atomic battery and the rechargeable battery and adapted to control the charging of said rechargeable battery by said atomic battery.

10. The system of claim 9 wherein the charging controller causes the charging of the rechargeable battery to be controlled as a function of the amount of charge stored in the rechargeable battery.

11. The system of claim 10 wherein the charging controller is a zener diode disposed between the atomic battery and the rechargeable battery, the zener diode having a turn-on voltage selected to maintain the amount of charge stored in the rechargeable battery to no greater than a pre-selected value.

12. The system of claim 10 wherein the rechargeable battery has an output voltage, the system further comprising:
a current controller adapted to control the current delivered by the atomic battery to the rechargeable battery as a function of the difference between the rechargeable battery output voltage and a pre-selected reference voltage.

13. The system of claim 1 further comprising a current switch disposed between the rechargeable battery and the atomic battery to prevent current from flowing from the rechargeable battery to the atomic battery.

14. The system of claim 1 wherein the atomic battery is substantially encased by said rechargeable battery.

15. The system of claim 14 further comprising a sealed housing wherein the atomic battery and rechargeable battery are positioned within the housing, the housing comprising a pair of electrically conductive feed-throughs that extends externally of the housing, said feed-throughs being electrically coupled to the rechargeable battery to provide an electrical conduction path from the rechargeable battery to said feed-throughs.

16. The system of claim 14 wherein the housing is formed of a radiation shielding material of a thickness sufficient to absorb stray radiation omitted by the atomic battery.

17. The system of claim 15 further comprising a charging controller connected between the atomic battery and the rechargeable battery and adapted to control the charging of said rechargeable battery by said atomic battery.

18. The system of claim 1 further comprising a current limiter electrically coupled to the rechargeable battery to limit the delivery of current by the rechargeable battery to a load to a pre-selected value.

19. The system of claim 1 further comprising a voltage monitor electrically coupled to the rechargeable battery and adapted to maintain the voltage of the rechargeable above a prescribed minimum value.

20. The system of claim 1 wherein said atomic battery comprises at least a first plurality of atomic batteries arranged in series circuit arrangement such that the overall voltage of the plurality is the additive sum of the voltage of each atomic battery in said first plurality of atomic batteries.

21. The system of claim 1 wherein said atomic battery comprises at least a second plurality of atomic batteries arranged in parallel circuit arrangement such that the overall current delivery capability of said second plurality is the additive sum of the current delivery capability of each atomic battery in said second plurality of atomic batteries.

22. The system of claim 1 wherein the atomic battery comprises a plurality of atomic batteries arranged in series circuit arrangement and a plurality of atomic batteries arranged in parallel circuit arrangement.

23. A system for charging an energy storage device comprising:
an energy storage device capable of storing electrical energy; and
an atomic battery coupled to the energy storage device whereby electrical current generated by the atomic battery is provided to charge the energy storage device.

24. The system of claim 23, wherein the energy storage device is a capacitor.

25. The system of claim 23, wherein the energy storage device is a rechargeable battery.
